# DEMANDE DE BREVET EUROPEEN

(11) **EP 0 953 376 A1**
(43) Date de publication de la demande: **03.11.1999**
(21) Numéro de dépôt: 99400950.4
(22) Date de dépôt: 19.04.1999
(51) Int. Cl.: B01D 53/94, F01N 3/20

(54) **Procédé d'injection controlée d'hydrocabures dans une ligne d'échappement d'un moteur à combustion interne**

(30) Priorité: 29.04.1998 FR 9805363
(71) Demandeur: INSTITUT FRANCAIS DU PETROLE, 92852 Rueil-Malmaison Cedex (FR)
(72) Inventeur: Bouchez, Mathias, 92190 Meudon (FR); Martin, Brigitte, 69230 Saint Génis Laval (FR); Bourges, Patrick, 92500 Rueil-Malmaison (FR)

(57) **Abrégé**

- La présente invention concerne un procédé d'injection contrôlée d'hydrocarbures dans une ligne d'échappement d'un moteur à combustion interne fonctionnant en mélange pauvre, comprenant une élimination catalytique des oxydes d'azote.
- Le procédé selon l'invention consiste à injecter une certaine quantité d'hydrocarbures en amont de l'élimination catalytique, de façon périodique et pendant un faible intervalle de temps, grâce à des injections pulsées d'hydrocarbures.
- La fréquence et l'amplitude des impulsions d'hydrocarbures sont préférentiellement contrôlées en fonction de conditions de fonctionnement du moteur.

## Description

La présente invention concerne le domaine de l'élimination des oxydes d'azote émis à l'échappement de moteurs à combustion interne, notamment lorsqu'ils fonctionnent en mélange pauvre.

On connaît différentes formulations catalytiques permettant de convertir les d'oxydes d'azotes dans la ligne d'échappement, avant que les gaz d'échappement ne soient émis à l'atmosphère.

Les formulations les plus couramment utilisées sont Platine/Alumine qui sont surtout actives à basses température (de l'ordre de 200°C) et les formulations cuivre/zéolithe actives à plus hautes températures (de l'ordre de 350°C).

Toutefois, l'efficacité de la réduction des oxydes d'azote en milieu oxydant dépend des conditions de fonctionnement du moteur et notamment de la température des gaz d'échappement, de leur débit.

Le rapport entre les réducteurs contenus dans les gaz d'échappement et les oxydes d'azote (NOₓ) est également très important, comme il sera expliqué ci-après.

Les réducteurs impliqués dans la réduction catalytique des oxydes d'azote en milieu oxydant sont essentiellement les hydrocarbures (HC).

Un problème se présente dès lors que ces réducteurs ne sont pas en quantité suffisante pour assurer une conversion correcte des oxydes d'azote. Les moteurs diesel par exemple présentent ce type d'inconvénient. On a alors des rapports HC/NOₓ bien inférieurs à l'unité alors que l'activité des catalyseurs n'est vraiment significative que pour des rapports HC/NOₓ supérieurs à l'unité.

On connaît différents moyens pour augmenter la teneur en hydrocarbures des gaz d'échappement.

Il est connu de réaliser une injection d'hydrocarbures directement dans la ligne d'échappement, en amont de la conversion catalytique. Un système spécifique, indépendant du moteur est alors utilisé.

Les moteurs équipés d'un système d'injection de carburant sous haute pression, système dit de "common Rail", permettent des injections contrôlées d'hydrocarbures dans le moteur lui-même. En opérant des injections-pilotes de carburant avant ou après l'injection principale, on modifie la composition des gaz à l'échappement et notamment la réactivité vis-à-vis du catalyseur.

On peut ainsi augmenter de façon significative les hydrocarbures à l'échappement et obtenir une concentration suffisante pour réduire les oxydes d'azote sur le catalyseur.

De façon connue, les formulations catalytiques utilisées pour assurer la réduction des oxydes d'azote en milieu oxydant se caractérisent par une plage de température relativement étroite, de sorte que la majeure partie du fonctionnement ne bénéficie pas d'une conversion satisfaisante.

Les injections connues de carburant additionnel à l'échappement sont par ailleurs réalisées en continu ce qui implique donc une certaine "consommation additionnelle".

Afin de remédier à ces inconvénients et d'améliorer l'activité d'un catalyseur déNoₓ, il est possible, conformément à l'invention, d'adopter une stratégie particulière d'injection des hydrocarbures.

Ainsi la présente invention a pour objet un procédé d'injection contrôlée d'hydrocarbures dans une ligne d'échappement d'un moteur à combustion interne fonctionnant en mélange pauvre, comprenant une élimination catalytique des oxydes d'azote.

Selon l'invention, le procédé consiste à injecter une certaine quantité d'hydrocarbures en amont de l'élimination catalytique, de façon périodique et pendant un faible intervalle de temps, grâce à des injections pulsées d'hydrocarbures ; Plus précisément, on réalise ladite conversion avec un catalyseur ayant une formulation de type Platine/Alumine.

Conformément à l'invention, la fréquence et l'amplitude des impulsions d'hydrocarbures sont contrôlées en fonction de conditions de fonctionnement du moteur.

Selon une particularité de l'invention, les injections sont contrôlées par un calculateur.

En outre, on peut mesurer la température des gaz d'échappement en amont de l'élimination catalytique.

Ainsi, on contrôle l'injection en fonction de la température des gaz d'échappement.

Préférentiellement, le procédé selon l'invention est mis en oeuvre pour des températures permettant l'oxydation des hydrocarbures envoyés par impulsions sur le catalyseur.

Plus précisément, on réalise ladite conversion avec un catalyseur ayant une formulation de type Platine/Alumine.

Les hydrocarbures injectés sont préférentiellement de type gas-oil.

Les températures de mise en oeuvre sont préférentiellement supérieures à 200°C, plus particulièrement comprises entre 230°C et 300°C.

Il est possible, sans sortir du cadre de l'invention, de combiner des impulsions pulsées d'hydrocarbures avec une injection continue d'hydrocarbures.

Conformément à l'invention, la durée entre la fin d'une injection et le début de l'injection suivante est comprise entre 1 et 10 s.

Plus précisément, la durée de l'injection est comprise entre 1 et 10 s.

De façon avantageuse, la quantité d'hydrocarbure injectée est telle que l'on obtient, en amont de l'élimination catalytique, un gaz dont la composition présente un rapport HC/NOx compris entre 1 et 30.

Selon un mode particulier de réalisation de l'invention, la quantité d'hydrocarbure injectée est telle que l'obtient, en amont de l'élimination catalytique, un gaz dont la composition présente un excès d'oxydant.

D'autres caractéristiques, avantages, détails de l'invention apparaîtront mieux à la lecture de la description qui va suivre, faite à titre illustratif et nullement limitatif en référence aux dessins annexés sur lesquels :
- La figure 1 montre des courbes de mise en oeuvre du procédé selon l'invention; et
- La figure 2 montre des taux de conversion obtenus pour différentes températures, selon l'invention et selon l'art antérieur.

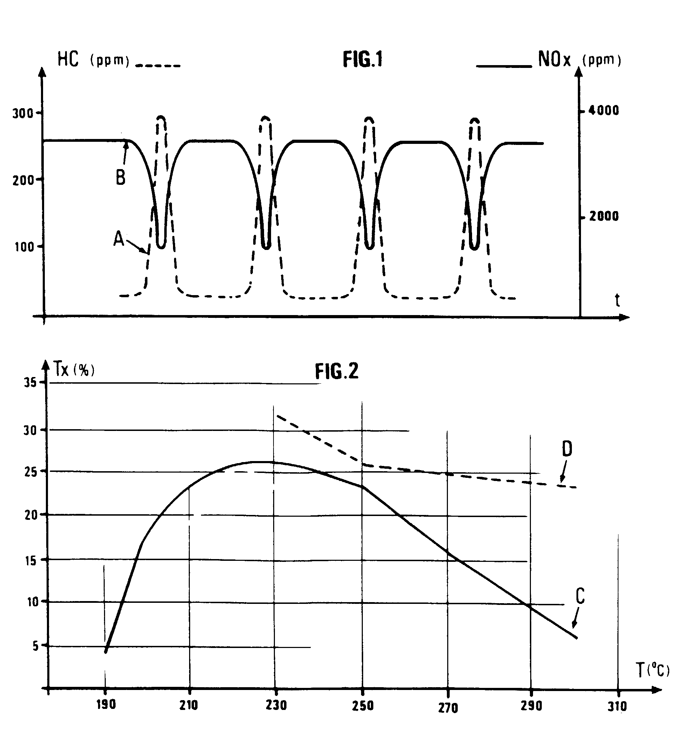

De façon plus précise, la figure 1 montre, par les courbes A et B, la mise en oeuvre et l'intérêt de l'invention.

La courbe A représente en effet des injections périodiques et pulsées d'hydrocarbures dans la ligne d'échappement, en amont de la conversion catalytique.

La courbe B concerne la "réponse" du catalyseur à ces injections c'est-à-dire la quantité d'oxydes d'azote mesurée en aval du catalyseur de conversion.

Il apparaît clairement que chaque impulsion d'hydrocarbures fait nettement diminuer la quantité d'oxydes d'azote émis à l'échappement. La réponse du catalyseur est très sensible au gradient d'hydrocarbures.

Ainsi des "pics" successifs d'hydrocarbures permettent d'atteindre des taux de conversion supérieurs à ce que l'on obtiendrait par une injection continue.

Les pics sont préférentiellement obtenus avec des injections dont la durée est comprise entre 1 et 10 s. On réalise ainsi une série d'impulsions favorable à la réduction des NOx car il a été constaté que l'exaltation de la réduction des oxydes d'azote avait une durée de cet ordre. Ceci est un laps de temps minimum pour que la surface du catalyseur se régénère.

La figure 2 montre de façon plus précise le gain en conversion obtenu selon l'invention.

Les hydrocarbures injectés sont, selon ce mode de réalisation, du gas oil ; le support catalytique comprend du platine sur alumine et la vitesse volumétrique par heure est de l'ordre de 40.000 h⁻¹.

Ces courbes donnent en effet le taux de conversion des oxydes d'azote en fonction de la température des gaz d'échappement.

La courbe C concerne une injection traditionnelle c'est-à-dire continue tandis que la courbe D est relative à la mise en oeuvre de l'invention.

Les mesures qui ont été faites dans les conditions particulières prédéfinies montrent que pour des températures comprises entre 230°C et 300°C, le taux de conversion est toujours supérieur à celui de l'art antérieur. Le gain en conversion est notamment significatif pour des températures supérieures à 250°C.

En fonction des conditions de fonctionnement du moteur, la fréquence et l'amplitude des impulsions sont optimisées afin de conduire au maximum d'efficacité du catalyseur tout en limitant la surconsommation liée à l'injection complémentaire d'hydrocarbures.

La mise en oeuvre de l'invention nécessite donc un catalyseur d'oxydes d'azote disposé dans la ligne d'échappement. Le catalyseur permettant la réduction des oxydes d'azote en milieu oxydant est habituellement constitué de métaux précieux et/ou de métaux de transition. Un système d'injection, externe ou interne au moteur, est en outre nécessaire. Il doit permettre d'augmenter de façon significative la concentration en hydrocarbures en amont du catalyseur.

Le système d'injection est commandé préférentiellement par un calculateur, tel que celui qui commande les différents autres équipements du moteur.

Le calculateur reçoit des informations telles que la température en entrée du catalyseur, la concentration en Noₓ des gaz d'échappement, le débit et la composition des gaz. En fonction de l'ensemble de ces données et de stratégies pré-programmées, le calculateur décide si une injection continue ou des injections pulsées selon l'invention doivent être appliquées.

Sans sortir du cadre de l'invention, une injection pulsée peut être appliquée combinée avec une injection continue d'hydrocarbures. Autrement dit il n'est pas nécessaire de partir d'une absence d'injection pour réaliser une injection pulsée. Dans le cas d'application cité ci-dessus, si la température des gaz est plutôt faible, par exemple inférieure à 200°C, alors une injection continue sera préférentiellement choisie. Pour des températures supérieures, l'invention sera mise en oeuvre car le gain escompté est significatif. Le calculateur détermine ainsi la quantité d'hydrocarbures optimale à injecter, selon le cas de figure. Pour le fonctionnement, selon l'invention, avec des impulsions d'hydrocarbures, la fréquence et l'amplitude de ces impulsions seront déterminées par le calculateur en fonction des informations reçues.

Il s'agit d'obtenir une conversion maximale tout en limitant la surconsommation liée à la post-injection.

De façon avantageuse, la quantité d'hydrocarbure injectée est telle que l'on obtient, en amont de l'élimination catalytique, un gaz dont la composition présente un rapport HC/NOx compris entre 1 et 30. Dans le rapport précité hydrocarbure est exprimé en ppmc et les oxydes d'azote en ppm.

Particulièrement, la quantité d'hydrocarbure injectée est telle que l'obtient, en amont de l'élimination catalytique, un gaz dont la composition présente un excès d'oxydant. On agit en effet en mélange pauvre.

## Revendications

1. Procédé d'injection contrôlée d'hydrocarbures dans une ligne d'échappement d'un moteur à combustion interne fonctionnant en mélange pauvre, comprenant une élimination catalytique des oxydes d'azote, caractérisé en ce qu'il consiste à injecter une certaine quantité d'hydrocarbures en amont de l'élimination catalytique, de façon périodique et pendant un faible intervalle de temps, grâce à des injections pulsées d'hydrocarbures, et en ce que l'on réalise une conversion catalytique des oxydes d'azote avec un catalyseur ayant une formulation de type Platine/Alumine.

2. Procédé selon la revendication 1, caractérisé en ce que la fréquence et l'amplitude des impulsions d'hydrocarbures sont contrôlées en fonction de conditions de fonctionnement du moteur.

3. Procédé selon l'une quelconque des revendications précédentes, caractérisé en ce que les injections sont contrôlées par un calculateur.

4. Procédé selon l'une quelconque des revendications précédentes, caractérisé en ce que l'on mesure en outre la température des gaz en amont de l'élimination catalytique.

5. Procédé selon la revendication 4, caractérisé en ce que l'on contrôle l'injection en fonction de la température des gaz d'échappement.

6. Procédé selon l'une quelconque des revendications précédentes, caractérisé en ce qu'il est mis en oeuvre pour des températures permettant l'oxydation des hydrocarbures envoyés par impulsions sur le moyen d'élimination catalytique des oxydes d'azote.

7. Procédé selon l'une quelconque des revendications précédentes, caractérisé en ce que les hydrocarbures injectés sont constitués de gas-oil.

8. Procédé selon l'une quelconque des revendications précédentes, caractérisé en ce qu'il est mis en oeuvre pour des températures supérieures à 200°C.

9. Procédé selon la revendication 8, caractérisé en ce qu'il est mis en oeuvre pour des températures de gaz d'échappement comprises entre 230°C et 300°C.

10. Procédé selon l'une quelconque des revendications précédentes, caractérisé en ce que l'on combine des injections pulsées d'hydrocarbures à une injection continue d'hydrocarbures.

11. Procédé selon l'une quelconque des revendications précédentes, caractérisé en ce que la durée entre la fin d'une injection et le début de l'injection suivante est comprise entre 1 et 10 s.

12. Procédé selon l'une quelconque des revendications précédentes, caractérisé en ce que la durée de l'injection est comprise entre 1 et 10 s.

13. Procédé selon l'une quelconque des revendications précédentes, caractérisé en ce que la quantité d'hydrocarbure injectée est telle que l'on obtient, en amont de l'élimination catalytique, un gaz dont la composition présente un rapport HC/NOx compris entre 1 et 30.

14. Procédé selon l'une quelconque des revendications 1 à 12, caractérisé en ce que la quantité d'hydrocarbure injectée est telle que l'obtient, en amont de l'élimination catalytique, un gaz dont la composition présente un excès d'oxydant.
